# EUROPEAN PATENT APPLICATION

(11) **EP 3 805 194 A1**
(43) Date of publication of application: **14.04.2021**
(21) Application number: 20198256.8
(22) Date of filing: 25.09.2020
(51) Int. Cl.: C07C 51/25, B29C 48/00, B29C 48/25, B29C 48/345, B01J 2/20, B01J 2/26, F26B 17/02, F26B 21/00

(54) **METHOD FOR PRODUCING A MULTIMETAL OXIDE CATALYST UNDER GAS-TIGHT CONDITIONS**

(71) Applicant: BASF SE, 67056 Ludwigshafen am Rhein (DE)
(72) Inventor: The designation of the inventor has not yet been filed
(74) Representative: Reitstötter Kinzebach

(57) **Abstract**

A method for producing a multimetal oxide catalyst comprises preparation of a precursor composition, exposing said precursor composition to elevated temperatures to activate the composition, and grinding the activated composition. The preparation of the precursor composition comprises: a) forming a plasticized precursor composition from the constituents of the composition; b) discharging the plasticized precursor composition from an extruder having at least one die to form extrudates; c) allowing the extrudates to drop onto a transfer surface disposed beneath the at least one die whereby the extrudates break into pieces which come to rest on the transfer surface; d) transferring the pieces to at least one drying chamber; and e) moving the pieces, through the at least one drying chamber on an air permeable drying conveyor belt; wherein steps b) through d) are carried out under reduced pressure. The method allows the production of a multimetal oxide catalyst with uniform characteristics. Fine particles of the multimetal oxide precursor that may be generated during extrusion of the plasticized precursor composition and handling of the extrudates are removed.

## Description

Acrylic acid is an important monomer which finds use as such or in the form of its acrylic esters for obtaining polymers suitable, for example, as adhesives. On the industrial scale, acrylic acid is prepared predominantly by heterogeneously catalyzed partial gas phase oxidation of propene. Useful catalysts are comprised of multimetal oxide compositions.

### TECHNICAL BACKGROUND

Catalytically active materials are generally obtainable by producing a precursor material which is catalytically inactive or may have reduced activity, and exposing said precursor material to elevated temperatures.

Of increasing importance is that all of the precursor material is treated under very uniform conditions in order to obtain a total amount of active material which has very uniform characteristics. The oxidation of propene to acrolein and/or acrylic acid is highly exothermic. Fluctuations in the activity of the individual catalyst particles over a given population of catalyst particles which are contained in an industrial fixed-bed tubular reactor results in a disequilibrium of the temperature. The multimetal oxide catalysts have, depending on their chemical composition and preparation conditions, a temperature range in which activity, selectivity and catalyst life are optimally balanced. If particles having greatly differing activities are present in a population of the catalyst particles in a reactor, part of the catalyst is inevitably operated at a temperature which is more or less far away from the optimum temperature range of the respective catalyst particles. This is associated with declines in the yield, selectivity and catalyst life.

WO 2010/000764 discloses a process for producing a ringlike oxidic shaped body comprising the mechanical compaction of a pulverulent aggregate. In the working examples thereof, a precursor spray powder is converted to a paste with 16.7% by weight (based on the powder) of water in a kneader and extruded by means of an extruder to obtain extrudates of 6 mm diameter. These were cut into sections of 6 cm, dried on a 3-zone belt dryer under air, and then treated thermally at a temperature in the region of 830°C.

It is desirable to obtain an active catalyst material for the oxidation of propene to acrolein or acrylic acid which material is as uniform as possible because this results in better catalyst performance such as product selectivity and COx-selectivity. In order to obtain an active material which has very uniform characteristics it is important for the extrudates to dry evenly during the passage through the belt dryer. Unfortunately, the extrudates tend to stick together and intertwine. This impairs uniform drying and ultimately results in an active material with unsatisfying non-uniform characteristics.

### SUMMARY OF THE INVENTION

The problem underlying the invention is to provide a method which allows the production of a multimetal oxide catalyst with uniform characteristics, in particular for the oxidation of propene to acrolein or acrylic acid. A further problem is to provide a method which allows the production of a multimetal oxide catalyst, in particular for the oxidation of propene to acrolein or acrylic acid, which leads to a product having improved catalyst performance such as product selectivity and COx-selectivity.

The invention relates to a method for producing a multimetal oxide catalyst, comprising preparation of a precursor composition, exposing said precursor composition to elevated temperatures to activate the composition, and grinding the activated composition, wherein the preparation of the precursor composition comprises:
a) forming a plasticized precursor composition from the constituents of the composition;
b) discharging the plasticized precursor composition from an extruder having at least one die to form extrudates;
c) allowing the extrudates to drop onto a transfer surface disposed beneath the at least one die whereby the extrudates break into pieces which come to rest on the transfer surface;
d) transferring the pieces to at least one drying chamber; and
e) moving the pieces through the at least one drying chamber on an air permeable drying conveyor belt;
wherein steps b) through d), preferably steps b) through e), are carried out under reduced pressure.

### BRIEF DESCRIPTION OF THE DRAWINGS

- Fig. 1: is a perspective view of an extruder die plate.
- Fig. 2: is a schematic view on the exit side of the extruder die plate.
- Fig. 3: is a view on the cross-section along A-A in fig. 2.
- Fig. 4: is a view on the cross-section along B-B in fig. 2.
- Fig. 5: is an enlarged view on the inserts into the holes of fig. 1.
- Fig. 6: is a view on the cross-section along A-A in fig. 5.
- Fig. 7: is a perspective view of a drying chamber.
- Fig. 8: is a cross-sectional view through the drying chamber along A-A.

### DETAILED DESCRIPTION OF THE INVENTION

### Multimetal Oxide

The expression "metal" within "multimetal oxide" is meant to comprise metals and half-metals such as bismuth.

Here and throughout the specification, the term "stoichiometry of the general formula #" is also referred to as "stoichiometry #".

Preferably, the multimetal oxide catalyst is useful for the selective gas phase oxidation of alkenes to yield α,β-unsaturated aldehydes and / or α,β-unsaturated carboxylic acids, in particular for the selective gas phase oxidation of propene to yield acrolein.

In an embodiment, the catalytically active multimetal oxide has a stoichiometry of the general formula I

[Y¹_{a'}Y²_{b'}O_{x'}]ₚ[Y³_{c'}Y⁴_{d'}Y⁵_{e'}Y⁶_{f'}Y⁷_{g'}Y⁸_{h'}O_{y'}]_{q} (I)

where
Y¹ = only bismuth or bismuth and at least one of the elements tellurium, antimony, tin and copper,
Y² = molybdenum or tungsten, or molybdenum and tungsten,
Y³ = an alkali metal, thallium and/or samarium,
Y⁴ = an alkaline earth metal, nickel, cobalt, copper, manganese, zinc, tin, cadmium and/or mercury,
Y⁵ = iron or iron and at least one of the elements vanadium, chromium and cerium,
Y⁶ = phosphorus, arsenic, boron and/or antimony,
Y⁷ = a rare earth metal, titanium, zirconium, niobium, tantalum, rhenium, ruthenium, rhodium, silver, gold, aluminum, gallium, indium, silicon, germanium, lead, thorium and/or uranium,
Y⁸ = molybdenum or tungsten, or molybdenum and tungsten,
a' = 0.01 to 8,
b' = 0.1 to 30,
c' = 0 to 4,
d' = 0 to 20,
e' > 0 to 20,
f' = 0 to 6,
g' = 0 to 15,
h' = 8 to 16,
x', y' = numbers which are determined by the valency and frequency of the elements in I other than oxygen, and
p, q = numbers whose p/q ratio is from 0.1 to 10.

Particularly advantageous catalytically active multimetal oxides of stoichiometry I are those in which Y¹ is only bismuth.

Catalytically active multimetal oxides of stoichiometry I comprise three-dimensional regions of the chemical composition Y¹_{a'}Y²_{b'}O_{x'} which are dispersed in a matrix phase of the chemical composition Y³_{c'}Y⁴_{d'}Y⁵_{e'}Y⁶_{f'}Y⁷_{g'}Y⁸_{h'}O_{y'}. Preferably, the longest diameter of the regions (longest direct line passing through the center of the region and connecting two points on the surface (interface) of the region) is from 1 nm to 100 µm, more preferred from 10 nm to 500 nm or from 1 µm to 50 or 25 µm.

Advantageous at least 25 mol % (preferably at least 50 mol % and more preferably 100 mol %) of the total [Y¹_{a'}Y²_{b'}O_{x'}]ₚ content of the catalytically active multimetal oxides of stoichiometry I is in the form of three-dimensional regions of chemical composition Y¹_{a'}Y²_{b'}O_{x'} which are delimited from their local environment as a consequence of their different chemical composition and whose longest diameter is in the range from 1 nm to 100 µm.

The production of catalytically active multimetal oxides of the stoichiometry of the general formula I involves preformation of an activated composition of the formula Y¹_{a'}Y²_{b'}O_{x'} as a source of the elements Y¹, Y² in the absence of the remaining constituents of the multimetal oxide. The preformed, ground activated composition Y¹_{a'}Y²_{b'}O_{x'} is then mixed with sources of the remaining constituents of the multimetal oxide. In such a procedure, it should be ensured that the preformed mixed oxide Y¹_{a'}Y²_{b'}O_{x'} does not go into solution to a significant degree.

For example, water-soluble salts of Y¹ such as nitrates, carbonates, hydroxides or acetates can be mixed with Y² acids or ammonium salts thereof in water, the mixture can be dried (preferably spray-dried) and the dried composition is used for forming a plasticized precursor composition.

The remaining constituents of the desired active multimetal oxide of the general formula I are prepared from suitable sources in a manner known per se (cf. EP-A 835 and DE-C 33 38 380, and DE-A 44 07 020) to produce, for example, a very intimate, preferably fine dry mixture. This is achieved, for example, by combining water-soluble salts such as halides, nitrates, acetates, carbonates or hydroxides in an aqueous solution and then by, for example, spray-drying the aqueous solution or suspending water-insoluble salts, for example oxides, in aqueous medium and then, for example, by spray-drying the suspension). The obtained mixture is referred to as matrix composition. The constituents of the matrix composition are either oxides or are those compounds which can be converted to oxides by heating, if appropriate in the presence of oxygen and/or oxygen sources. Subsequently, the preformed, ground activated composition and the matrix composition are mixed in the desired quantitative ratio and with addition of shaping assistants to give the mixture shapable to an unsupported catalyst precursor body, preferably by compression such as tabletting. The shaping can be affected via the stage of an intermediate compaction. A suitable procedure is described in detail in documents DE-A 44 07 020, EP-A 835, EP-A 575 897 and DE-C 33 38 380.

The preformed, ground activated composition particles are present essentially unchanged in the finished unsupported catalyst in the longest dimension established by the classification. Otherwise, the procedure may be as described in German application 102007003778.5.

Within the stoichiometries of the general formula I, preference is given to those which correspond to the general formula la

[Bi_{a"}Z²_{b"}O_{x"}]_{p"}[Z⁸₁₂Z³_{c"}Z⁴_{d"}Fe_{e"}Z⁵_{f"}Z⁶g_{"}Z⁷_{h"}O_{y"}]_{q"} (Ia)

where
Z² = molybdenum or tungsten, or molybdenum and tungsten,
Z³ = thallium and/or an alkali metal, preferably K, Cs and/or Sr,
Z⁴ = nickel and/or cobalt,
Z⁵ = phosphorus, arsenic, boron, antimony, tin, cerium, vanadium, chromium and/or Bi,
Z⁶ = silicon, aluminum, titanium and/or zirconium, preferably Si,
Z⁷ = copper, silver and/or gold,
Z⁸ = molybdenum or tungsten, or molybdenum and tungsten,
a" = 0.1 to 1,
b" = 0.2 to 2,
c" = 0.02 to 2,
d" =3 to 10,
e" = 0.01 to 5, preferably 0.1 to 3,
f = 0 to 5,
g" = 0 to 10, preferably >0 to 10, more preferably 0.2 to 10 and most preferably 0.4 to 3, h" = 0 to 1,
x", y" = numbers which are determined by the valency and frequency of the elements in the general formula la other than oxygen, and
p", q" = numbers whose p"/q" ratio is from 0.1 to 5, preferably 0.5 to 2.

Within the catalytically active multimetal oxides of stoichiometry la, preference is given to those in which Z²_{b"} = (tungsten)_{b"} and Z⁸₁₂ = (molybdenuM)₁₂.

Catalytically active multimetal oxides of stoichiometry la comprise three-dimensional regions of chemical composition Bi_{a"}Z²_{b"}O_{x"} which are delimited from their local environment as a consequence of their different composition. Preferably, their longest diameter (longest direct line passing through the center of the region and connecting two points on the surface (interface) of the region) is from 1 nm to 100 µm, frequently from 10 nm to 500 nm or from 1 µm to 50 or 25 µm.

In a further embodiment, multimetal oxide catalysts materials particularly suitable as active materials for catalysts for the heterogeneously catalyzed partial gas-phase oxidation of acrolein to acrylic acid comply with the following general stoichiometry II

Mo₁₂VₐX¹_{b}X²_{c}X³_{d}X⁴ₑX⁵_{f}X⁶_{g}Oₙ (II),

where
X¹ is W, Nb, Ta, Cr and/or Ce,
X² is Cu, Ni, Co, Fe, Mn and/or Zn,
X³ is Sb and/or B,
X⁴ is one or more alkali metals (Li, Na, K, Rb, Cs) and/or H,
X⁵ is one or more alkaline earth metals (Mg, Ca, Sr, Ba),
X⁶ is Si, Al, Ti and/or Zr,
a is from 1 to 6,
b is from 0.2 to 4,
c is from 0 to 18, preferably from 0.5 to 18,
d is from 0 to 40,
e is from 0 to 2,
f is from 0 to 4,
g is from 0 to 40 and
n is a number which is determined by the valency and frequency of the elements other than oxygen in II.

Preferably, the variables are to be selected within the specified ranges with the proviso that the molar fraction of the element Mo, based on the total amount of all elements other than oxygen in the multimetal oxide material (II), is from 20 to 80 mol %, the molar ratio of Mo contained in the catalytically active multimetal oxide material (II) to V, Mo/V, contained in the catalytically active multimetal oxide material (II) is from 15:1 to 1:1, and the corresponding molar ratio Mo/(total amount of W and Nb) is from 80:1 to 1:4 (and the corresponding molar ratio Mo/Cu is from 30:1 to 1:3, if the multimetal oxide material contains Cu).

Preferred multimetal oxide catalysts II are those in which
X¹ is W, Nb and/or Cr,
X² is Cu, Ni, Co and/or Fe,
X³ is Sb,
X⁴ is Na and/or K,
X⁵ is Ca, Sr and/or Ba,
X⁶ is Si, Al and/or Ti,
a is from 2.5 to 5,
b is from 0.5 to 2,
c is from 0.5 to 3,
d is from 0 to 2,
e is from 0 to 0.2,
f is from 0 to 1,
g is from 0 to 15 and
n is a number which is determined by the valency and frequency of the elements other than oxygen in II.

Preferred multimetal oxide catalysts comply with the following general stoichiometry IIa

Mo₁₂VₐX_{b}X²_{c}X⁵_{f}X⁶_{g}Oₙ (IIa)

where
X¹ is W and/or Nb,
X² is Cu and/or Ni,
X⁵ is Ca and/or Sr,
X⁶ is Si and/or Al,
a is from 3 to 4.5,
b is from 1 to 1.5,
c is from 0.75 to 2.5,
f is from 0 to 0.5,
g is from 0 to 8 and
n is a number which is determined by the valency and frequency of the elements other than oxygen in IIa.

Preferably, the variables are to be selected within the specified ranges with the proviso that the molar fraction of the element Mo, based on the total amount of all elements other than oxygen in the multimetal oxide active material (IIa), is from 20 to 80 mol %, the molar ratio of Mo contained in the catalytically active multimetal oxide material (IIa) to V, Mo/V contained in the catalytically active multimetal oxide material (IIa) is from 15:1 to 1:1, the corresponding molar ratio Mo/Cu is from 30:1 to 1:3 and the corresponding molar ratio Mo/(total amount of W and Nb) is from 80:1 to 1:4.

The ground activated multimetal oxide active material (II) or (IIa) is normally coated onto inert supports, as explained in more detail below usually with the addition of a small amount of water and, optionally, other binders.

Support materials suitable for coated catalysts are e.g. porous or non-porous aluminum oxides, silicon dioxide, thorium dioxide, zirconium dioxide, silicon carbide or silicates such as magnesium or aluminum silicate (e.g. steatite of type C 220 from CeramTec). The carrier bodies can have a regular or irregular shape, with regularly shaped carrier bodies with a defined surface roughness, e.g. balls or hollow cylinders, being preferred.

It is suitable to use essentially non-porous, rough-surface, spherical supports made of steatite, the diameter of which is 1 to 8 mm, preferably 4 to 5 mm. However, it is also suitable to use cylinders as support, the length of which is 2 to 10 mm and the outside diameter is 4 to 10 mm. In the case of rings as support bodies, the wall thickness is also usually 1 to 4 mm. Ring-shaped supports preferably have a length of 2 to 6 mm, an outer diameter of 4 to 8 mm and a wall thickness of 1 to 2 mm. Rings of geometry 7 mm x 3 mm x 4 mm (outer diameter x length x inner diameter) are particularly suitable as carrier bodies.

### Plasticized Precursor Composition

A plasticized precursor composition useful in the invention is obtainable by kneading a dry powder of precursor constituents with water or a water-soluble organic solvent or a mixture thereof.

Preferably, the plasticized precursor composition is a precursor composition of a multimetal oxide of formula II above. Alternatively, the plasticized precursor composition is a precursor composition for [Y¹_{a'}Y²_{b'}O_{x'}] of formula I above.

Useful sources for the elemental constituents of the desired multimetal oxide are oxides and/or those metal compounds which can be converted to oxides by heating, at least in the presence of gaseous molecular oxygen and/or of components which release gaseous oxygen.

Known suitable sources (starting compounds) of the elemental constituents other than oxygen of the desired multimetal oxide active material, are used in the stoichiometric ratio required to obtain the desired multimetal oxide active material, as already mentioned. Suitable starting compounds of Mo, V, W and Nb are also the oxo compounds thereof (molybdates, vanadates, tungstates and niobates) or the acids derived therefrom. Oxygen-containing sources are likewise advantageous.

The thorough mixing of the starting compounds can be carried out in dry or wet form. However, the thorough mixing is preferably effected in wet form. Usually, the starting compounds are mixed with one another in the form of an aqueous solution and/or suspension. Particularly intimate dry blends are obtained in the mixing method described when exclusively sources and starting compounds present in dissolved form are used as starting materials. A preferably used solvent or dispersion medium is water. Liquids such as isobutanol or a mixture of such liquids with water are also useful as solution and/or dispersion medium.

The aqueous material (solution or suspension) is then dried. The drying process is preferably carried out by spray-drying and immediately after the preparation of the aqueous solution or suspension (the drying can also be effected by filtration and subsequent drying of the filtercake). In case of spray drying, the inlet temperature is, in general, from 250 to 350°C and the outlet temperature from 90 to 150°C.

The particle diameter of the resulting spray powder at a dispersion pressure of 1.1 bar absolute is typically: d₅₀ from 1 to 50 µm; d₁₀ from 0.5 to 10 µm; d₉₀ from 10 to 30 µm. If water was the basis of the liquid medium, the resulting spray powder will normally comprise not more than 20% of its weight, preferably not more than 15% of its weight and more preferably not more than 10% of its weight of water. These percentages also apply generally in the case of use of other liquid solution or suspension assistants.

The resulting powder is expediently kneaded with addition of suitable liquids, for example, water or a water-soluble organic solvent or a mixture thereof.

The kneading of the obtained powder may be carried out in a conventional manner, for example in a kneader or extruder. As a kneader, a horizontal mixing machine comprising a barrel and two Sigma-type blades, or Z-type blades may be used. These blades are driven by separate gears at different speeds, one running faster than the other, for example about 1.5 times faster. The kneader in general has a powerful motor and a speed reducer to drive the two blades. The kneading blades preferably work in opposite directions against the outer walls of the barrel. The kneader usually has a W-type barrel with a hydraulic tilt that turns it, and a heating or cooling jacket outside. Heating and cooling may also be effected via the interior of the kneading blades. Preferably, the kneader is equipped with an extrusion screw for discharging the kneaded mass. Such combination provides for the efficiency of a double arm - sigma blade mixer with the efficiency of an extrusion screw for the mixing and discharging of heavy viscous materials. During kneading the working direction of the discharge screw is in direction of the interior of the barrel. For discharging the kneaded mass, the working direction is reversed. A suitable kneader is VM 160 with Z-type blades of Aachener Misch- und Knetmaschinenfabrik, 52074 Aachen, Germany.

Alternatively, the kneading step may also be carried out in a combined kneader/extruder of the type described below.

During kneading, heat is produced within the kneaded material, in the chamber and also by the rotor shaft because of internal heat generation due to shearing, dispersion, etc., during kneading. During kneading it is preferred to cool the mass to keep the temperature below 50°C, preferably below 30°C. Cooling may be provided through passage of a cooling liquid in the rotor shaft and/or jackets in the barrel.

In the present kneading process, a liquid, preferably water or a mixture of water and a water-miscible organic liquid, such as isopropanol or isobutanol, is added in an amount sufficient to obtain a viscous mass. The addition of a lower organic carboxylic acid (e.g. acetic acid) often proves advantageous during the kneading (typical added amounts are from 5 to 10% by weight, based on powder material used).

Kneading is carried out with an amount of liquid such that the storage modul of the kneaded mass is in the range from 2 · 10⁶ Pa to 5 · 10⁷ Pa at 10 rad. The storage modul is determined with a rotational viscosimeter of the type MCR 302 (Anton Paar GmbH, 73760 Ostfiltern, Germany) which was equipped with a plate to plate geometry having a diameter of 25 mm. The slot was about 1 mm and the temperature was kept constant at 23°C. The measurements themselves were performed with small deformation amplitude. To determine the linear viscoelastic range, an amplitude sweep was performed at a constant angular frequency of 10 rad/s. The frequency sweep was performed with a deformation amplitude in the linear viscoelastic range and a frequency range of 100 rad/s to 0.1 rad/s and 100 rad/s to 0.158 rad/s, respectively.

### Extruder

The kneaded mass is discharged into the hub of an extruder. Extruders are screw presses which, according to the functional principle of the mincer, press solid to viscous masses under high pressure and high temperature (depending on the product from (10 to 300 (700) bar and 120 to 300°C) through a hole. There are extruders with one or a plurality of screw shafts. The conveying and pressure build-up is caused by the friction of the mass rotating with the screw on the stationary housing wall (barrel). The mass thus left behind in the rotation is pushed by the helical screw flights to the outlet nozzle. Single and twin screw extruders can be used, whereby different screw shapes and arrangements are possible. The necessary pressure build-up of the mass before it exits the die is achieved by the formation of self-contained spaces bounded by the extruder screw on the one hand and the extruder housing on the other, which become smaller and smaller as the screw shaft rotates towards the die. In the case of a single-screw extruder, this can be achieved by a conically oriented housing and a decreasing lead angle or an increasing core diameter of the extruder screw. Twin-screw extruders are used with constant barrel and screw diameters as well as in conical designs, whereby the two screws are fully, partially or not at all intermeshing and can rotate in the same or opposite directions.

In the present case a single or twin screw extruder can be used. The use of twin-screw extruders with tangential twin screws improves the mixing effect and is therefore more preferred. Even more advantageous is the use of intermeshing twin screws with a high flight depth, which, in addition to the improved mixing effect, also have good self-cleaning properties and very good product conveyance, so that they are particularly useful for the processing of powdery raw materials and pasty masses. In addition, twin-screw extruders enable the dosing of bulk water and other additives at any point in the processing section.

Preferably, an extruder screw which is divided into three zones is used. In the feed zone, which is located directly below the product inlet, the extruder screw has a relatively high flight depth to receive the powdery raw material.

In the subsequent compression zone, the reduction of the flight depth increases the melt pressure and generates high shear forces, which lead to dissipation of the mechanical drive energy into heat. The thermally or mechanically induced disintegration and crosslinking reactions take place in this zone.

The final pressure build-up zone is limited by a nozzle which gives the extrudate exiting the extruder the desired shape. This results in a further increase of the melt pressure and the melt temperature. However, in the present case the extruder is preferably cooled to keep the temperature below 30°C an extruder useful in the present case is a water-cooled extruder type P160 of ECT Kema (02829 Schopstal, Germany).

In a preferred embodiment, the extruder comprises a barrel having a screw rotating therein and pins project radially inwardly into the hollow interior of the barrel. Preferably, these pins are distributed both uniformly around the periphery of the barrel and in axial alignment with one another. The main functions of the pins are that of creating an obstacle to the feeding movement of the extrusion material, which is thus disturbed and mixed more thoroughly, and of exchanging heat with extrusion material. In order to prevent interference during operation, the pins are fit in the barrel wall, opposite interruptions in the thread of the extrusion screw, and also project inwardly the cylindrical barrel by a distance which is less than the transverse dimension of the gap between the core of the screw and the internal surface of the barrel.

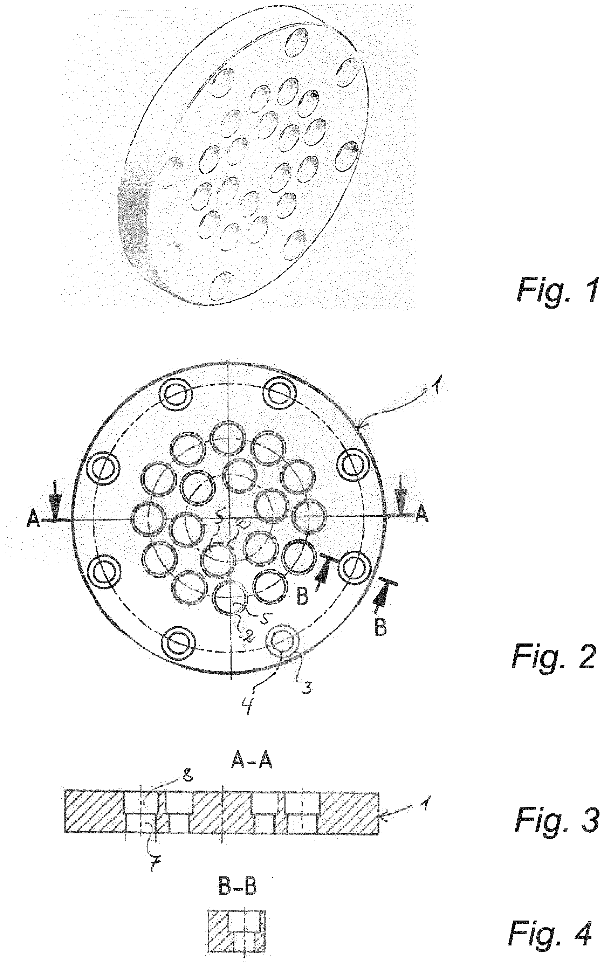

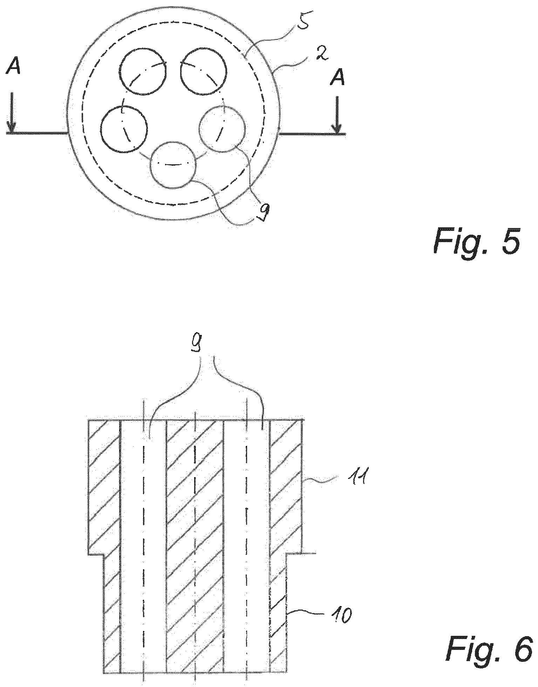

At the end of the extruder barrel die attachments in the form of at least one perforated plate are provided. The plate comprises a plurality of cylindrical holes for discharging the plasticized mass. Preferred are cylindrical holes having a diameter from 3 to 50 mm. The arrangement of the holes is arbitrary but preferably the holes are arranged on one or more (concentrical) circles. In a preferred embodiment, the cylindrical holes have a diameter of 20 to 40 mm, into which an insert, preferably made of a hard plastic material, is inserted which itself has a plurality of, preferably cylindrical, drillings with a diameter in the range from about 3 to 8 mm. Figures 1 to 6 illustrate by way of example the die plate used to form strands of the plasticized precursor composition. Figure 1 is a perspective view of the die 1 without said inserts. Figure 2 is a schematic view on die 1 which comprises a plurality of holes 2 which are arranged along on two concentrical circles. The holes 3 on the outer circumference are boreholes for fixing the die at an extruder barrel. The die is fixed via screws 4 to the extruder barrel. The die exhibits a plurality of cylindrical holes 2 arranged on two inner concentrical circles. Each hole 2 is equipped with a plastic insert 5 having a plurality of cylindrical drillings 9 (not shown in figure 2 but in figures 5 and 6) with a diameter in the range from about 3 to 8 mm. Figure 3 is a cross-sectional view along A-A in figure 2 and shows that each hole is divided into two sections 7 and 8 whereby section 7 is adjacent to the extruder barrel and section 8 has an extended diameter to take up insert 5. Figure 4 is a cross-sectional view along B-B in figure 2 and shows that hole 3 houses a bolt or screw 6 for fixing the die 1 to the extruder barrel. Figure 5 is a view on the exit side of insert 5 having a plurality of drillings 9 which are arranged on a circle. Figure 6 is a view on a cross-section along A-A in figure 5 showing drillings 9 extending through the cylindrical insert 5 in parallel to the central longitudinal axis of insert 5. Insert 5 has two sections 10 and 11. Section 10 having a smaller diameter fits into section 7 of figure 3 whereas section 11 having a larger diameter fits into section 8 of figure 3. A suitable material for the inserts is a polyoxymethylene polymer.

The plasticized precursor composition is discharged through the drillings 9 to give an extrudate in the form of continuous strands.

### Extrudates

Due to their own weight the extruded continuous strands break off into pieces which are referred to in the following as extrudate or extrudate pieces. If desired, the continuous strands may be cut into pieces after exit of the extruder. It has been discovered that a defined residual moisture content and/or a storage modulus of the extrudate results in pieces being very similar in length. This contributes to an even drying of the pieces and uniform activity distribution of the finished catalyst.

The pieces preferably have a diameter in the range of 3 to 8 mm, preferably 5 to 7 mm and a length of from about 2 to 10 cm, preferably about 3 to 6 cm.

Preferably, the plasticized extrudate has a residual moisture content in the range from 12 to 18 % by weight, based on the total weight of the strands. The residual moisture content is determined using an Excellence Plus HX204 (Fa. Mettler Toledo, Columbus, USA). The sample is placed into the measurement device and heated up to 160°C. The weight difference of the sample prior and after the heat treatment results in the residual moisture content in wt.-%. The storage modulus, determined as described below at 10 rad and 23°C, is in the range from 2 to 3·10⁶ Pa.

Preferably, the plasticized extrudate has a stickiness (adhesion force) in the range from 150 to 180 µN, as measured with an indenter measurement of the sample surface with a nanoindenter type G200 from Keysight Technologies (71034 Böblingen, Germany). The measuring curve for the adhesion force evaluation is described in the ISO 14577 standard. These properties have the effect that the extrudate pieces do not stick together and are sufficiently friable.

### Transfer surface

The extrudate is allowed to drop onto a transfer surface underneath the extruder die(s). The drop height from the extruder die to the transfer surface is preferably 450 mm or less and 200 mm or more, in particular in the range from 300 to 400 mm. A higher drop height may cause the extrudate pieces to deform when they hit the transfer surface. A lower fall height may not be sufficient to cause the strands to break off.

The transfer surface is intended to transfer the pieces into a drying chamber. In a preferred embodiment, the transfer surface also serves to align and evenly distribute the pieces. In a further preferred embodiment, the transfer surface comprises a swiveling belt conveyor (in the following called swiveling belt). The swiveling belt serves to transfer the pieces before they come to rest on the air permeable drying conveyor belt (in the following called drying belt). In general, the swiveling belt is arranged directly beneath the extruder die and is less broad than the drying belt; for example, it is about 1/2 of the drying belt. Preferably, the swiveling belt is inclined downwards from the extruder die to the drying belt to transport the pieces onto the drying belt. The swiveling belt takes up the extrudate pieces falling from the extruder, transports and distributes the pieces, due to the swiveling action, onto the drying belt. In an embodiment, the transfer surface is inclined downwards to the drying belt. This supports the function of the transfer surface. In this manner a uniform distribution of the pieces over the width of the drying belt is achieved. Further, an even height of the layered pieces on the drying belt is achieved.

The swiveling belt is preferably made of a dense mesh fabric. The drying belt is preferably made out of stainless steel. It may be a continuous belt or composed of a plurality of hinge-like overlapping belt strips.

In an alternative, the extruded continuous strands are allowed to drop directly onto the air permeable drying conveyor belt, in which case the air permeable drying conveyor belt also constitutes the transfer surface transferring the pieces to the at least one drying chamber.

### Gas-tight connection

According to the invention, the extruded continuous strands and the pieces thereof are kept under reduced pressure throughout. This means, all steps of handling and conveying the extruded continuous strands and the pieces, from the time when the strands leave the extruder die at least up to the time when the pieces enter the drying chamber and preferably up to the time when the pieces leave the drying chamber are carried out under reduced pressure.

In general, the pressure is reduced for about 5 to 50 mbar, preferably 5 to 10 mbar (compared to the atmospheric pressure outside of the housing).

To this end, a confined feeding station is provided. The confined feeding station comprises a housing, e.g. a gastight housing, which is preferably made of a metal. The housing accommodates the transfer surface and separates it from the environment. The confined feeding station is arranged between the at least one die and the drying chamber. The drying belt extends into the confined feeding station where it takes up the strands and pieces from the swiveling belt. Preferably, the confined feeding station is attached directly to the at least one die and to the drying chamber in a gastight connection to allow the extrudate to emerge from the extruder die and be transported and dried under reduced pressure. For example, the confined feeding station may be attached to the extruder die by a flange and ring seal.

The confined feeding station may be tightly connected to or formed integrally with the housing of the belt dryer. This ensures a gastight connection of the confined feeding station and the drying chambers.

Due to the reduced pressure, an air flow is ventilated in and through the feeding station. By this, a dry surface is formed on the extrudate pieces so that they do not stick together, do not entangle and break into more uniform pieces. This means that the drying of the pieces is more uniform what results in a finished catalyst with improved properties.

By the air flow, fine particles of the multimetal oxide precursor that may be generated during extrusion of the plasticized precursor composition and handling of the extrudates are removed. If not removed, the fine particles of the multimetal oxide precursor can cause deterioration in catalyst properties. The removal may be achieved by ventilating an air flow sufficient for removing at least a part of fine particles. Ventilation also prevents condensation of moisture. Preferably, the fine particles of the multimetal oxide precursor entrained in the air flow are collected by use of a trapping material. By removal of the fine powders contained in this gas, work environment may be enhanced.

Typically, the reduced pressure condition extends to both the feeding station and the belt dryer. The gas-tight connection to the housing of the belt dryer enables to carry out the drying process under reduced pressure as compared to the atmospheric pressure outside of the housing. The reduced pressure is achieved by supplying hot air into the drying chambers and sucking off exhaust (wet) air from the drying chambers in an amount larger than the amount of hot air such that the pressure is adjusted to the desired reduced pressure value. This is achieved by a control unit which controls the amount of hot air supply and sucked off exhaust air.

### Belt Dryer

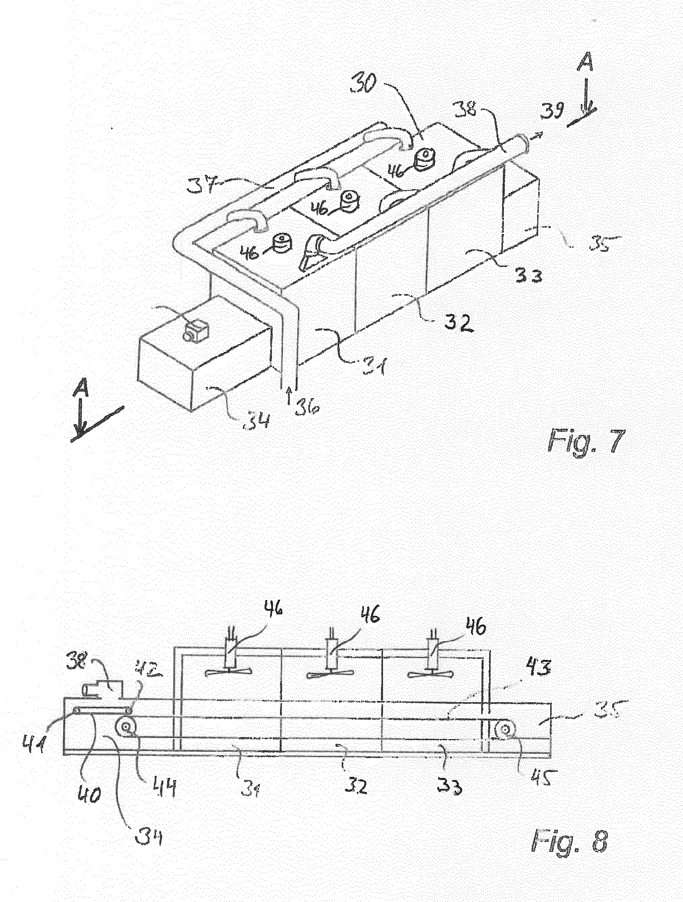

The plasticized strands are then subjected to a drying process (see fig. 7 and 8).

The drying belt moves the extrudate pieces through at least one drying chamber where they are dried by contact with hot air. The hot air may be fed horizontally but preferably vertically onto the drying belt which is air permeable, such as a perforated belt. In an embodiment, the flow of hot air is forced through the pieces and the drying belt by ventilators which generate a circulating air flow, so that the hot air dries the pieces and is exhausted together with the humidity from the drying chamber. In general, the temperature prevailing in the at least one drying chamber is in the range of 90 to 140°C. The at least one drying chamber is heated by supplying hot air to the drying chamber. The hot air preferably has a temperature in the range from 150 to 200°C.

In a particular preferred embodiment, the drying chamber comprises a plurality of drying zones which are preferably arranged one after another. In general, the drying chamber comprises 2 to 4, preferably 3, drying zones. Each drying zone has its own hot air supply and its own exhaust system for discharging the humid air. Each drying zone may be operated under different drying conditions. For example, the hot air temperature may be increased or decreased from drying zone to drying zone starting with the first zone after the swiveling belt. In general, the temperature is increased or decreased from zone to zone by about 10 to 25°C. Preferably, the temperature is increased form drying zone to drying zone starting with the first zone after the at least one extruder die.

The velocity of the drying belt depends on the length of the drying zone, the drying temperature, the layer thickness of the extrudate pieces and the initial humidity and in particular on the desired final residual humidity of the pieces. It is preferred to obtain a final residual humidity in the range from 0.1 to 1.2 %, based on the total weight of the pieces.

In addition, the belt dryer and the swiveling belt may comprise means for cleaning the belt, in particular, on the sides of the belt where deposits may be present.

The dried product is discharged at the end of the belt dryer where it falls into a storage container before being transferred into a device for heat treatment of the product. Preferably, discharge of the product is carried out via an airlock. To facilitate the discharge of the product, a spiked roller may be used. If advisable, the product will first be discharged into a lump breaker in which any lumps are crushed into small pieces before it will be transferred into the storage container. The lump breaker may also be operated under reduced pressure, i.e. it is then in gas-tight connection with the housing of the belt dryer. The dried product is the precursor composition for the active multimetal oxide catalyst.

The drying procedure is, for example, illustrated by figures 7 and 8. Figure 7 is a perspective view on the belt dryer and the housing for the swiveling belt, whereas figure 8 is a cross-sectional view along A-A through the apparatus of figure 7. The drying apparatus comprises a housing 30 for the drying belt, a housing 34 for the swiveling belt and a housing 35 for the discharge apparatus. Housings 30, 34 and 35 are in gas-tight connection. The housing 30 is divided into 3 drying zones 31, 32 and 33. Housing 34 comprises the swiveling belt 40 which is driven by rolls 41 and 44. Socket 38 is designed for the connection to the extruder die pipe 37 is for the hot air supply, whereas pipe 38 is for the exhaust air. Each drying zone 31, 32 and 33 is connected with pipe 37 or 38 by a branch pipe so that each drying zone can be separately supplied with hot air and be separately exhausted. The swiveling belt 40 is underneath socket 38, which is in gas-tight connection with the extruder die 1. The swiveling belt takes up and distributes the extrudate pieces, due to the swiveling action, onto the drying belt 43 which is arranged underneath the end of the swiveling belt. The drying belt extends from housing 34 through housing 30 into housing 35 and moves the product to be dried driven by rolls 44 and 45 through drying zones 31, 32 and 33. Hot air having a temperature in the range from 150 to 180°C is supplied at 36 into pipe 37 and additional heating means are provided before the entrance of heating zones 32 and 33 to enable the drying in these zones at a higher temperature than in drying zone 31. The hot air flows into drying zones 31, 32 and 33, where it is circulated by means of ventilators (not shown) vertically through the layer of product to be dried. Exhaust air is sucked off at 39 such that a reduced pressure is maintained from the extruder die 1 to housing 35. Drying belt 43 carries the product into housing 35, where it is discharged into a lump breaker and finally into a buffer container.

### Heat treatment

From the storage container the precursor material is transferred to a device, wherein it is subjected to a thermal treatment (heat treatment) at elevated temperatures to activate the precursor material and obtain the active multimetal oxide catalyst. In general, the heat treatment is carried out in the range from 100 to 1100°C. Preferably, the heat treatment is carried out in a device, which allows the thermal treatment of the precursor material in a moving bed, as is present in thermal treatments in rotary tube furnaces. A suitable rotary tube furnace is disclosed in greater detail in WO 2004/108267, which is incorporated herein by reference in its entirety. Owing to the continuous movement of the precursor material in rotary tube furnaces, said material forms a continuously self-homogenizing bed, within which, for example, hot spots or cold spots do not form (most thermal treatments of precursor materials involve exothermic or endothermic processes which lead to the formation of hot spots (locations of maximum temperature within the thermally treated precursor material) or to the formation of cold spots (locations of minimum temperature within the thermally treated precursor material)). However, both excessively high and excessively low temperatures adversely affect the catalytic properties of the active material.

The thermal treatment in a rotary tube furnace is carried out preferably in such a way that the angle of inclination of the rotary tube with the horizontal is adjusted to a value other than zero. The highest point of the rotary tube is the point of introduction of the precursor material and the lowest point is the location of the material discharge. The rotary tube is operated continuously, i.e. the precursor material to be thermally treated is fed continuously to one side of the rotary tube, transported continuously in the rotary tube from the highest to the lowest point and continuously discharged there. Along the way through the rotary tube, the precursor material undergoes thermal treatment. The temperature desired in the material present in the rotary tube is usually generated indirectly by bringing the rotary tube wall to a certain temperature from the outside.

Frequently, it is desired to have a certain gas atmosphere in the rotary tube which is achieved by supplying it as a gas stream flowing through the rotary tube furnace. The gas stream may consist of air, but may also contain useful gases, such as CO, CO₂, NH₃, N₂, NOx, SO₂ or acetonitrile, or consist of these gases or of oxygen. However, it may also contain a mixture of these gases or consist of such a mixture. Preferably, the thermal treatment in a rotary tube furnace is carried out such that at least a portion of the gas stream flowing through the rotary tube furnace is circulated.

The gas stream flowing through the rotary tube furnace may be from >0 to 500 m³ (S.T.P. [standard temperature and pressure])/h or up to 300 m³ (S.T.P.)/h. Frequently, the gas stream flowing through the rotary tube furnace may be from ≥50 to 500 (or 300), in general from 100 to 300, m³ (S.T.P.)/h.

A schematic diagram of this rotary tube furnace apparatus (and used in the working example) is shown by way of example in fig. 1 of WO 2004/108267 which is incorporated herein together with its description by reference (the reference numerals used in the following relate to fig. 1 of WO 2004/108267). Control procedures are preferably effected under computer control.

A central element of such a rotary tube furnace apparatus suitable for carrying out the novel process is the rotary tube (1).

Rotary tube lengths of up to 15 m, frequently of up to 12 m, are suitable for the process; as a rule, the rotary tube length is ≥1 m, as a rule ≥4 m; the internal diameter is usually from 20 cm to 2 m, frequently from 20 cm to 1 m. It may be, for example, 4000 mm long and have an internal diameter of 700 mm. It may be produced from stainless steel 1.4893 and have a wall thickness of 10 mm.

Reciprocating lances can be mounted in an expedient manner on the inner surface of the rotary tube furnace. It serves primarily for raising the precursor material to be thermally treated in the rotary tube furnace (the material to be thermally treated) and thus promoting the self-homogenization in a moving bed. For example, the height of the reciprocating lances may be 5 cm or more. In principle, an individual reciprocating lance may extend over the entire length of the rotary tube. Expediently, however, a reciprocating lance extends only over a part of the length of the rotary tube. In the exemplary embodiment, they may have, for example, a length of 23.5 cm. In these cases, it is advantageous if a plurality of reciprocating lances (e.g. four = a quadruple) are mounted at one and the same height of the rotary tube furnace equidistant over the circumference (e.g. every 90°). It is advantageous in terms of application technology if a plurality of such multiples is present along the rotary tube. In the exemplary embodiment, eight such quadruples (in each case 23.5 cm apart) are present along the rotary tube. The reciprocating lances of two adjacent multiples (quadruples) are present on the circumference of the rotary tube, preferably staggered relative to one another. Advantageously, no reciprocating lances are present at the beginning and at the end of the rotary tube furnace (first and last 23.5 cm in the exemplary embodiment).

The circumferential velocity of the rotary tube can advantageously be varied. Typical speeds are from >0 to 5 or 3 rotations per minute. The rotary tube is expediently rotatable either counterclockwise or clockwise. For example, in the case of clockwise rotation, the material remains in the rotary tube; for example, in the case of counterclockwise rotation, the precursor material to be thermally treated is transported by the inclination of the rotary tube from the feed (3) to the discharge (4) and removed from the rotary tube by means of a discharge aid (e.g. a paddle).

The angle of inclination of the rotary tube with the horizontal can advantageously be varied. Typical ranges are from 0 to 4° or 2°. In batchwise operation, it is in fact 0°. In continuous operation, the lowest point of the rotary tube is located at the material discharge.

The material feed is expediently volume-controlled via a rotary-vane feeder or is carried out with mass control by means of a balance. The material discharge is, as stated above, controlled via the direction of rotation of the rotary tube.

During batchwise operation of the rotary tube which is dimensioned as above (and could also be dimensioned larger or smaller for carrying out the novel process, as stated above), an amount of from 200 to 600 kg of material can be thermally treated. Said amount is usually present exclusively in the heated part of the rotary tube.

In order to be able to circulate at least a portion of the gas stream flowing through the rotary tube furnace, the rotary tube furnace apparatus to be used according to the invention requires a circulation capacity necessary for this purpose (in the simplest case, a pipeline system). While this is set up statically, the rotary tube is necessarily mounted in a movable manner (rotation).

In order in each case to connect the stationary and the rotating element to one another at the rotary tube entrance and at the rotary tube exit, it is possible to use either ball bearings or gaps which are sealed by graphite or Teflon rings (graphite or Teflon press-fit seals). Owing to their stability to high temperature, graphite press-fit seals are preferred.

Expediently, the rotary tube tapers at its beginning and at its end and projects into that tube of the circulation pipe which leads in and leads out, respectively.

These connections are advantageously flushed with sealing gas. The two flushing streams (11) supplement the gas stream passed through the rotary tube, at the entrance of the gas stream into the rotary tube and at the exit of the gas stream from the rotary tube. The chemical composition of the flushing streams can be adapted to the temperature desired in the rotary tube for the thermal treatment. For example, air can be used as the sealing gas. Particularly in the case of thermal treatments carried out at relatively high temperatures, however, inert gas (e.g. nitrogen) is preferably used as sealing gas since this in fact simultaneously results in protection from oxidation in addition to producing the sealing effect. The amount of sealing gas is preferably kept low. An individual flushing stream of this type is therefore expediently from >0 to 50, preferably from 1 to 50 m³ (S.T.P.)/h.

The sealing effect is important, inter alia, for preventing any of the gas atmosphere which prevails in the rotary tube itself and frequently also contains components which are not completely toxicologically safe (e.g. CO₂, NOx, NH₃, CO, SO₂, acetonitrile) from entering the surrounding atmosphere through static/rotating connections.

The recycle gas stream (gas circulation) is transported by means of a recycle gas compressor (13) (fan, e.g. a fan of the type KXE 160-004030-00, from Konrad Reitz GmbH, 37671 Höxter, Germany), which aspirates in the direction of the gas stream flowing out of the rotary tube and applies pressure in the other direction. Immediately downstream of the cycle gas compressor, the gas pressure is as a rule above atmospheric pressure (i.e. above one atmosphere). A recycle gas outlet (recycle gas can be discharged via a control valve (14) and is aspirated via the exit gas compressor (17) (fan; e.g. of the type T100/315-R3/500, from Meidinger AG, 4303 Kaiseraugst, Switzerland) is located downstream of the recycle gas compressor. It is expedient according to the invention if a pressure reducer (15), e.g. an aperture plate (cross-sectional constriction; e.g. by about a factor of 3) is present downstream of the outlet point for the recycle gas. Said pressure reducer provides a simple possibility for aspirating more gas on the intake side of the recycle gas compressor than is delivered on the pressure side of the recycle gas compressor.

In this way, a slightly reduced pressure can be established in the rotary tube, i.e. the pressure of the gas stream flowing through the rotary tube may be below the ambient pressure of the rotary tube on leaving the rotary tube. This measure additionally helps to ensure that none of the gas atmosphere in the rotary tube escapes to the outside. In the rotary tube, it is however also possible to establish slightly superatmospheric pressure relative to the ambient pressure. Frequently, the pressure directly downstream of the exit of the gas stream from the rotary tube is brought to a value in the range from -1 to-10 mbar relative to the external pressure, i.e. the pressure of the gas stream flowing through the rotary tube may be below the ambient pressure of the rotary tube on leaving the rotary tube. This is preferred according to the invention.

The pressure in the rotary tube is expediently established on the basis of pressure measurements by means of a pressure sensor. Suitable pressure sensors are, for example, those of the type 7MF4433 from Siemens (80333 München, Germany), which operate according to the pressure transducer (membrane measuring unit) principle. It is expedient in terms of application technology if the pressure sensor (16) is positioned directly downstream of the exit of the gas stream from the rotary tube. A further pressure sensor may be present upstream of the entrance of the gas stream into the rotary tube. This may also be a single pressure sensor. The pressure can then be established through the cooperation of pressure sensor (16), exit gas compressor (17) (fan which aspirates in the direction of the control valve), recycle gas compressor and fresh gas feed. If the two compressors and the fresh gas feed operate in a steady state (or if noncontrollable compressors are used), the control valve (14) is the sole pressure adjusting screw.

The velocity of the gas stream transported through the rotary tube is typically ≥0.1 m/s and ≤2 m/s.

The material in the rotary tube is expediently heated by heating the rotary tube from outside. In principle, this heating can be effected by direct firing, i.e. burners whose hot combustion gases are transported around the rotary tube surrounded by an envelope, for example with the aid of fans, are mounted below the rotary tube.

Preferably, however, the rotary tube is surrounded by an envelope, e.g. a right parallelepiped, which has electrically heated elements on its inside (resistance heating). For reasons relating to temperature homogeneity, the envelope should have such heating elements at least on two opposite sides. Preferably, however, the heating elements surround the rotary tube on all sides. Their distance from the outer surface of the rotary tube is typically from 10 to 20 cm. In the embodiment described here by way of example, the rotary tube rotates freely in a right parallelepiped (2) which has four equally long, electrically heated (resistance heating) heating zones in succession along the length of the rotary tube, each of which heating zone encloses the circumference of the rotary tube furnace. Each of the heating zones can heat the corresponding rotary tube section to temperatures from room temperature to 850°C. The maximum heating power of each heating zone is 30 kW. The distance between electrical heating zone and outer surface of the rotary tube is about 10 cm. At the beginning and at the end, the rotary tube projects about 30 cm out of the right parallelepiped.

In addition, a heater (10) offers the possibility of heating the gas stream passed into the rotary tube to the desired temperature before its entry into the rotary tube (e.g. to the temperature desired for the material in the rotary tube), in order thus to support the thermostating of the material present in the rotary tube furnace. If the thermal treatment of the precursor material is accompanied by an exothermic chemical reaction in the precursor material, the gas stream passed into the rotary tube is, according to the invention, advantageously fed into the rotary tube at a temperature which is below the temperature (e.g. up to 50°C, frequently up to 20°C) which is intended for the material in the rotary tube furnace. If, on the other hand, the thermal treatment of the precursor material is accompanied by an endothermic chemical reaction in the precursor material, the gas stream passed into the rotary tube is, according to the invention, advantageously passed into the rotary tube at a temperature which is above the temperature (e.g. up to 50°C, frequently up to 20°C) which is intended for the material in the rotary tube furnace.

In principle, the heater (10) may be a heater of any kind. For example, it may be an indirect heat exchanger. Such a heater can in principle also be used as a condenser (by adapting the temperature of the heating medium, e.g. use of cooling brine). The heater can in principle also be heated by means of direct or indirect firing. Direct or indirect steam heating is also suitable. In the case of direct steam heating, the recycle gas pipe is expediently at least partly trace-heated in order to suppress undesired condensation of the steam contained in the gas stream or, if required, specifically to separate off the steam by condensation. An electrical heater in which the gas stream is passed over electrically heated (resistance heating) metal wires is frequently employed. In the embodiment described by way of example, a CSN continuous flow heater, type 97 D 80 from Schniewindt KG, 58805 Neuerade, Germany, whose maximum power is 1*50 kW+1*30 kW, is employed.

Both the heating of the rotary tube furnace and the heating of the gas stream passed into the rotary tube are expediently controlled via the temperature of the material in the rotary tube. In batchwise operation, this is determined, as a rule, by means of a thermocouple projecting into the material. In the embodiment described by way of example, a lance (8), from which altogether three thermocouples (9) lead vertically into the material at intervals of 800 mm, is located for this purpose on the central axis of the rotary tube. The arithmetic mean of the three thermocouple temperatures is then understood as the temperature of the material. Inside the material present in the rotary tube, the maximum deviation of two measured temperatures is expediently, according to the invention, less than 30°C, preferably less than 20°C, particularly preferably less than 10°C, very particularly preferably less than 5 or 3°C.

The thermal treatment is frequently carried out at from 100 to 1100°C or from 200 to 800°C. Particularly preferred it is carried out either at from 600 to 800°C or at from 300 to 600°C (above mentioned temperatures are always the material temperatures).

The temperature rate at which the precursor material present in the rotary tube is heated up for the purpose of its thermal treatment is usually ≤10°C/min, frequently, the temperature rate is ≤8°C/min, often ≤5°C/min or ≤3°C/min or ≤2°C/min or ≤1°C/min. As a rule, however, this temperature rate is ≥0.1°C/min, in general ≥0.2°C/min, frequently ≥0.3°C/min or ≥0.4°C/min. Preferably, the temperature rate is in one of the following ranges:
0.1 to 10°C/min; 0.2 to 8°C/min; 0.4 to 5°C/min; 0.3 to 5°C/min; 0.2 to 5°C/min; 0.1 to 5°C/min; 0.4 to 3°C/min; 0.3 to 3°C/min; 0.2 to 3°C/min; 0.1 to 3°C/min; 0.4 to 2°C/min; 0.3 to 2°C/min; 0.2 to 2°C/min; 0.1 to 2°C/min.

The thermal treatment of the precursor material of a catalytically active material is frequently accompanied by an exothermic chemical reaction in which components of the gas stream passed through the rotary tube are also frequently involved. It is important that this chemical reaction does not take place in an uncontrolled manner and the heat liberated by the chemical reaction is removed rapidly, since an uncontrolled course can lead to excessive heat generation and uncontrolled temperature increase of the thermally treated material, which finally results in a deterioration in the properties of the active material.

In order to be able to counteract in good time such an uncontrolled course of the thermal treatment of the material, a rotary tube apparatus suitable for the novel process advantageously has a means for rapid cooling. This can be effected, for example, in a particularly efficient manner if the envelope surrounding the rotary tube (the right parallelepiped in the exemplary embodiment) has, on one side (e.g. in the lower part) orifices (longest dimension typically 60 cm) or holes through which ambient air or previously cooled air can be aspirated by means of a fan (5) (e.g. one of the type E 315/40-63, from Ventapp GmbH, 47906 Kempen, Germany) and can be discharged through flaps (7) present on the other (opposite) side (e.g. in the upper part) of the envelope and having an adjustable orifice. The rotary tube heating is frequently simultaneously switched off. Such rapid cooling also makes it possible to terminate the thermal treatment at exactly the right time and thus to prevent excessive thermal treatment. As an additional measure, the gas stream can be cooled (in the heater (10)) before being fed into the rotary tube.

The rapid cooling makes it possible, for example at the end of the thermal treatment of the precursor material, to reduce the temperature of the material present in the rotary tube within a period of ≤5, in general ≤4, frequently >2, hours by at least 300°C. As a rule, however, this cooling period is not less than 0.5 hour.

It is expedient in terms of application technology if fresh gas is metered into the actually recirculated recycle gas fraction (19) between the pressure reducer (15) and the heater (10). As in the exemplary embodiment a fresh gas base load (e.g. nitrogen (20)) is frequently metered in. By means of at least one splitter, it is then possible to respond to the measured values of the various component sensors used and to regulate in detail the component contents of the gas stream fed into the rotary tube. In the exemplary embodiment, this is a nitrogen/air splitter (21) which responds to the measured value of the oxygen sensor.

The component sensors are expediently installed (18) upstream of the recycle gas compressor. However, they could also be installed at another point.

By means of these sensors, reducing gas components, such as NH₃, CO, NO, N₂O, acetic acid or aerosols (e.g. ammonium acetate) and oxidizing components, such as NO₂ and O₂, are frequently determined, the content of which must often be within particularly narrow limits.

In the exemplary embodiment, two sensors (18) are installed, i.e. one for determining the ammonia content and one for determining the oxygen content. The ammonia sensor generally preferably operates according to an optical measuring principle (the absorption of light of certain wavelengths is proportional to the ammonia content of the gas). In the exemplary embodiment it is an apparatus from Perkin & Elmer of the type MCS 100. On the other hand, oxygen sensors are based as a rule on the paramagnetic properties of oxygen. In the exemplary embodiment, an Oximat from Siemens of the type Oxymat MAT SF 7 MB 101 0-2CA01-1 AA1-Z is expediently used as the oxygen sensor.

In the case of catalytic multimetal oxide active materials, oxygen absorption from the gas atmosphere prevailing in the rotary tube frequently takes place during the transition from the precursor material to the catalytically active material in the course of the novel thermal treatment. By means of oxygen sensors installed upstream of the entrance of the gas stream into the rotary tube and downstream of the exit of the gas stream from the rotary tube, this oxygen absorption can be quantitatively detected online and the oxygen supply in the gas stream flowing through the rotary tube can be correspondingly adapted (if such an adaptation is not effected, the oxygen supply in the gas stream fed to the rotary tube is usually kept substantially constant). Over- or under-oxidations of the active material can thus be avoided and hence the catalyst performance improved. It is also possible to proceed entirely analogously with reducing gas components.

The recycle gas procedure also proves to be particularly advantageous in this context when the character of the gas atmosphere prevailing in the rotary tube is changed from reducing to oxidizing or vice versa in the course of the thermal treatment. Such a procedure does in fact make it possible to carry out this change in a simple manner so that the gas atmosphere in the rotary tube is always outside the explosion range.

The gas stream flowing through the rotary tube generally also discharges very fine dust which originates from the precursor material to be thermally treated. A cyclone (12) is installed downstream of the outlet (but upstream of the sensors) of the gas stream passed through the rotary tube, for separating off solid particles entrained by the gas stream (the centrifugal separator separates solid particles suspended in the gas phase by cooperation of centrifugal and gravitational force; the centrifugal force of the gas stream rotating in the form of a vortex accelerates the sedimentation of the suspended particles).

The concomitant use of such a cyclone also prevents the very fine dust from being deposited on the walls of the recycle gas pipe (such deposition of very fine dust would have a noticeable disadvantageous effect, for example in the case of a product change; i.e. if the precursor material to be thermally treated is changed, the subsequent material may be contaminated, in the course of a passage of recycle gas, with the previously treated precursor material dust deposited on the walls; furthermore, the very fine dust may damage (change of heat transfer) or block the heater (20)).

The solid deposited in the cyclone is disposed of. The pressure drop produced by the cyclone is compensated by the recycle gas compressor.

Instead of a cyclone, it is also possible in principle to use any other apparatus which is suitable for separating finely divided solids from a gaseous dispersion phase.

The discharged recycle gas fraction (22) (exit gas) frequently contains gases, such as NOₓ, CO, acetic acid, NH₃, etc., which are not completely safe, and it is for this reason that said gases are usually separated off in an exit gas purification apparatus (23).

For this purpose, the exit gas is generally first passed via a scrubber column (this is substantially a column which is free of internals and contains, before its exit, a packing having separation activity); the exit gas and aqueous spray mist are passed co-currently or counter currently (2 spray nozzles having opposite spray directions).

Arriving from the scrubber column, the exit gas is expediently fed into an apparatus which contains a fine dust filter (as a rule a bundle of tube filters) from the interior of which the penetrated exit gas is removed. Advantageously, incineration is then finally effected in a muffle furnace.

The principle of mass flow measurement based on Coriolis forces, the principle of aperture plate measurement based on pressure differences and the principle of thermal convection are particularly suitable for regulating the total amount of the gas stream fed through the rotary tube, other than the sealing gas.

In the exemplary embodiment, the measurement of the amount of the gas stream fed to the rotary tube, other than the sealing gas, is effected by means of a sensor (28) from KURZ Instruments Inc., Montery (USA) of the type Model 455 Jr (measuring principle: mass flow measurement based on thermal convection and using an equal-temperature anemometer).

The rotary tube furnace apparatus described can be operated both continuously and batchwise. The material and gas phase are preferably fed counter currently through the rotary tube furnace in continuous operation.

Accordingly, rotary tube furnace apparatuses which comprise:
a) at least one recycle gas compressor (13);
b) at least one exit gas compressor (17);
c) at least one pressure reducer (15);
d) at least one fresh gas feed ((20), (21));
e) at least one heatable rotary tube (1); and
f) at least one recycle gas pipe
are especially suitable for carrying out the novel process.

If compressors (13) and (17) which are not regulatable are used, the rotary tube furnace apparatus also comprises at least one control valve (14).

Embodiments advantageous according to the invention moreover comprise at least one heater (10).

Very particularly preferred embodiments additionally comprise at least one integrated cyclone.

In addition, it is advantageous if the rotary tube furnace apparatus comprises an apparatus for rapid cooling.

If it is intended to use the rotary tube furnace apparatus also for the thermal treatments of material in which the gas stream passed through the rotary tube is also not at least proportionately circulated, it is expedient if the connection between cyclone (12) and recycle gas compressor (13) can be made according to three-way valve principle (26) and the gas stream can be fed directly into the exit gas purification apparatus (23). In this case, the connection to the exit gas purification apparatus, which connection is located downstream of the recycle gas compressor, is also made according to the three-way valve principle. If the gas stream substantially comprises air, this is aspirated (27) in this case via the recycle gas compressor (13). The connection to the cyclone is likewise made according to the three-wav valve principle. In this way, the gas stream is preferably sucked through the rotary tube so that the internal pressure of the rotary tube is less than the ambient pressure.
Preferably, the above treatment is carried out continuously and with countercurrent flow of material and gas stream, i.e. the material to be thermally treated is introduced into the rotary tube furnace at the opposite end to the gas stream (at the highest point of the rotary tube) and discharged from the rotary tube furnace at the opposite end to the gas stream.

In the exemplary embodiment of the rotary tube apparatus, the pressure downstream of the rotary tube exit (of the gas stream) is advantageously set to be -0.8 mbar below the external pressure during continuous operation. During batchwise operation, the same pressure setting is -0.2 mbar.

### Milling

The thermally treated bodies are then milled to a powder, usually to a particle size of 80 µm or less.

In an embodiment, the powder is applied to inert supports. This is particularly true for multimetal oxides having a stoichiometry II or Ila above. Expediently, for coating of the supports, the support is moistened with the powder material to be applied. After the application, drying is usually effected by means of hot air. The coat thickness of the powder material applied to the support is expediently chosen to be in the range from 10 to 1 000 µm, preferably from 50 to 500 µm, particularly preferably from 150 to 250 µm.

Support materials suitable for coated catalysts are, for example, porous or nonporous aluminas, silica, thorium dioxide, zirconium dioxide, silicon carbide or silicates, such as magnesium silicate or aluminum silicate (e.g. steatite of the type C 220 from CeramTec GmbH, 73207 Plochingen, Germany). The supports may have a regular or irregular shape, supports having a regular shape and pronounced surface roughness, e.g. spheres or hollow cylinders having a chip coating, being preferred.

The use of substantially nonporous spherical steatite supports having a rough surface (e.g. steatite of the type C 220 from CeramTec GmbH, 73207 Plochingen, Germany), whose diameter is from 1 to 8 mm, preferably from 4 to 5 mm, is suitable. However, the use of cylinders whose length is from 2 to 10 mm and whose external diameter is from 4 to 10 mm as supports is also suitable. In the case of annular supports, the wall thickness is moreover usually from 1 to 4 mm. Annular supports preferably to be used have a length of from 2 to 6 mm, an external diameter of from 4 to 8 mm and a wall thickness of from 1 to 2 mm. Rings measuring 7 mm*3 mm*4 mm (external diameter*length*internal diameter) are also particularly suitable as supports.

The coating of the supports with finely divided multimetal oxide active material obtainable in the manner described by thermal treatment, or with the finely divided precursor material thereof still to be subjected to the thermal treatment (intimate dry blend), is carried out as a rule in a rotatable container, as disclosed, for example, in DE-A 2909671, EP-A 293859 or in EP-A 714700. The procedure of EP-A 714700 is preferred.

The coating of the support body with the ground activated multimetal oxide composition is generally carried out in a rotatable container. After application, drying is usually done using hot air. The layer thickness of the powder composition applied to the support is expediently selected in the range from 10 to 1000 nm, preferably in the range from 50 to 500 µm and particularly preferably in the range from 150 to 250 µm.

Alternatively, [Y¹_{a'}Y²_{b'}O_{x'}] of formula I above, is mixed with sources of the remaining constituents of the multimetal oxide of formula II as explained in more detail above.

### Usefulness of the Multimetal Oxide Catalysts

The catalysts are suitable especially as catalysts for the partial oxidation of propene to acrolein or of isobutene and/or tert-butanol to methacrolein. The partial oxidation can, for example, be carried out as described in documents WO 00/53557, WO 00/53558, DE-A 199 10 506, EP-A 1 106 598, WO 01/36364, DE-A 199 27 624, DE-A 199 48 248, DE-A 199 48 523, DE-A 199 48 241, EP-A 700 714, DE-A 10313213, DE-A 103 13 209, DE-A 102 32 748, DE-A 103 13 208, WO 03/039744, EP-A 279 374, DE-A 33 38 380, DE-A 33 00 044, EP-A 575 897, DE-A 10 2004 003 212, DE-A 10 2005 013 039, DE-A 10 2005 009 891, German application 102007003778.5, DE-A 10 2005 010 111, DE-A 10 2005 009 885 and DE-A 44 07 020 for annular unsupported catalysts, and the catalyst charge may comprise, for example, only ring like unsupported catalysts obtainable as described or ring like unsupported catalysts diluted, for example, with inert shaped bodies. In the latter case, the catalyst charge is advantageously generally configured such that its volume-specific activity increases continuously, abruptly and/or in stages in flow direction of the reaction gas mixture.

### EXAMPLES AND COMPARATIVE EXAMPLES

### PREPARATION OF CATALYSTS

1) Preparation of hollow cylindrical shaped catalyst bodies H1 [Bi₁W₂O_{7.5}][Mo₁₂Co_{5.5}Fe_{3.0}Si_{1.6}K_{0.08}Oₓ] according to invention
   a) Preparation of the kneaded catalyst mass K1
      In a 10 I stainless steel pot, 5600 g of an aqueous nitric bismuth nitrate solution at 25°C (182.7 g, 39.8 mol Bi, free nitric acid: 3 to 5 wt.-%, BASF SE, 67056 Ludwigshafen, Germany) and within 15 min 1493 g of tungstic acid at 25°C (purity: >99 wt.-%, H.C. Starck, 38642 Goslar, Germany) were added with constant stirring with an anchor stirrer (diameter: 80 mm, 150 rpm) at 25°C. The resulting solution was stirred for another 3 hours at 25°C. The solution was then spray-dried at a gas inlet temperature of 300°C ± 10°C, a gas outlet temperature of 110°C ± 10°C and a disc speed of 30000 rpm within 2 hours and 20 minutes in a spray tower of GEA Niro (spray head no. F0 A, 2860 Søborg, Denmark). The resulting spray powder had a d₅₀ value of 2.64 µm at a dispersion pressure of 1.1 bar absolute (d₁₀ value = 0.68 µm and d₉₀ value = 20.1 µm).
      150 kg of the resulting spray powder were dosed into a kneader of the company AMK (Aachener Misch- und Knetmaschinen Fabrik, 52074 Aachen, Germany) type VM 160 (Z-shaped kneading blades). During dosing, the kneading blades worked in opposite directions against the outer walls of the tub and the working direction of the kneader's discharge screw was towards the inside of the tub (speed of the screw: 20 rpm). Then 20 litres of demineralised water were added and kneading was continued for a total of 30 minutes. The kneading blades continued to work in opposite directions towards the inside of the tub and the working direction of the squeezing screw pointed towards the inside of the tub. The kneading material in the kneader was cooled to 30°C during kneading with a water-glycol mixture (25 wt.-% glycol in 75 wt.-% water) and a circulation cooler of the type Unichiller P022w OLÉ spez (Fa. Huber Kältemaschinen GmbH, 77656 Offenburg, Germany). The cooling water cooled the kneading material through a double jacket on the tub and through the interior of the kneading blades. After 30 minutes kneading time the kneading material was discharged. For this purpose, the working direction of the discharge screw was reversed, and the speed was set to 12 rpm.
      Rheological characterization of the samples was performed with a rotational viscometer type MCR 302 (Anton Paar GmbH, 73760 Ostfiltern, Germany), which was equipped with a plate-plate measuring geometry with a diameter of 25 mm. The gap was adjusted to approx. 1 mm. The temperature during the measurement was controlled by a Peltier system. For all measurements the temperature was kept constant at 23°C. The measurements themselves were performed as an oscillation experiment with small deformation amplitude. To determine the linear viscoelastic range, an amplitude sweep was performed at a constant angular frequency of 10 rad/s. The frequency sweep was performed with a deformation amplitude in the linear viscoelastic range and a frequency range of 100 rad/s to 0.1 rad/s and 100 rad/s to 0.158 rad/s, respectively.
      The storage modulus of the plasticized catalyst mass K1 thus determined was 3.36·10⁶ Pa at 10 rad/s.
   b) Preparation and drying of catalyst extrudates E1 (Bi₁W₂O₇₅ = ½ Bi₂W₂O₉·1WO₃) Catalyst extrudates E1 were produced in a P160 screw extruder from ECT Kema (02829 Schopstal, Germany) cooled with demineralised water. The barrel diameter of the extruder was 250 mm and the pressure in the extruder was a maximum of 50 bar. During the extrusion process the extruder was cooled down to 20°C with a water-glycol mixture (25 wt.-% glycol in 75 wt.-% water) and a Unichiller 080TW spez circulating cooler (Huber Kältemaschinen GmbH, 77656 Offenburg, Germany). At the end of the extruder the kneading mass was pressed through die attachments which were located on a die plate. Figures 1 to 5 show the structure of the die plate and the die inserts inside. The Ultraform N die inserts had an outer diameter of 27.8 mm and contained 5 holes with a diameter of 6.0 mm each. The exact design of the die inserts is shown in Figures 5 and 6.
      The residual moisture content of the catalyst extrudates E1 was 16.5 wt.-%. The storage modulus determined by a rheological investigation as described in example a) "Preparation of the catalyst mass K1" was 2.28·10⁶ Pa at 10 rad.
      The stickiness (adhesion force) of the extrudates was measured with an indenter measurement of the sample surface with a nanoindenter type G200 from Keysight Technologies (71034 Böblingen, Germany). The measuring curve for the adhesion force evaluation is described in the ISO 14577 standard. The stickiness of the extrudate E1 was 168 ± µN.
      During the extrusion the extruder's press cylinder was directly connected via a conical ring seal (non-positive seal) with the inlet bunker of the belt dryer of Bernd Münstermann GmbH & Co. KG (48291 Telgte, Germany) in which the extrudates were dried. The catalyst extrudates E1 first fell onto a swivel belt (rotation speed 5 rpm) which is located in a feed bunker of the belt dryer (temperature: 25°C). The drop height from the extruder die to the swivel belt was between 450 mm and 302 mm (upper edge and lower edge of the extruder die, respectively). From the swivel belt the extrudates fell onto the drying belt (hinged plate belt) of the belt dryer (belt speed 10 cm/min). The drop height between the swivel and drying belt was 355 mm. The belt dryer was operated at a slight vacuum (-5 to -10 mbar).
      Drying was carried out in warm ambient air in 3 different temperature zones (temperature zone 1: 90-95°C, temperature zone 2: 115°C, temperature zone 3: 125°C). Each of the three temperature zones is equipped with its own circulating fan. Room air is drawn in by the ambient air fan and heated by the two air preheaters. In the first air preheater the ambient air is heated with 4 bar steam (145°C) before it is electrically heated to 155°C in the second air preheater. In each temperature zone, hot air flows from top to bottom through the strand pile, drying the strands and transporting the moisture into the exhaust gas. The temperature in each zone is controlled automatically by adjusting the preheated air supply volume. The exhaust gas from the belt dryer is fed from the individual zones under pressure control via two exhaust gas filters to a washing column. The pressure control is based on the measured pressure in zone 3.
      The dried extrudates are discharged into a weighed intermediate buffer via a spiked roller and a discharge hopper controlled by a control flap.
   c) Preparation of the calcined, milled catalyst powder C1 (Bi₁W₂O_{7.5} = ½ Bi₂W₂O₉·1WO₃) The extrudates were then calcined in a rotary kiln at a temperature of 830°C under air flow (reduced pressure 0.3 mbarg, 200 m³ (STP)/h of air, 50 kg/h of extrudate, speed: 1 rpm) as described example a) of the patent application WO 2015/067659. The preformed calcined mixed oxide thus obtained was milled with a shifter mill at 2500 rpm (Type 315 ZPS, Fa. Hosokawa Alpine Aktiengesellschaft, 86001 Augsburg, Germany). This resulted in the catalyst powder C1 with a dso-value of 2.8 µm (measured at a dispersion pressure of 2.0 barg) and a BET surface area of 0.6 m²/g.
   d) Preparation of hollow cylindrical shaped catalyst bodies H1 [Bi₁W₂O_{7.5}][Mo₁₂Co_{5.5}Fe_{3.0}Si_{1.6}K_{0.08} Oₓ]
      The preparation of the hollow cylindrical shaped catalyst bodies H1 from the starting materials C1 and C2 (Mo₁₂Co_{5.5}Fe_{3.0}Si_{1.6}K_{0.08}) was performed as described in patent application WO 2015/067659 in example c). The material C2 was prepared as in the patent application WO 2015/067659 in example b). The used tabletting press was a XT600 (Korsch AG, 13509 Berlin, Germany). The hollow cylindrical shaped bodies had the following dimensions:
      5 mm external diameter
      5 mm height
      2 mm internal diameter
2) Preparation of the reference hollow cylindrical shaped catalyst bodies H2 [Bi₁W₂O_{7.5}]ₐ[Mo₁₂Co_{5.5}Fe_{3.0}Si_{1.6}K_{0.08}Oₓ]₁
   The different preparation steps of the reference hollow cylindrical shaped catalyst bodies H2 were the same as the ones described for the hollow cylindrical shaped catalyst bodies H1, except for the extrusion. In this case, the extrudates E2 were prepared under atmospheric pressure.
3) Preparation of active catalyst mass H3 (Mo₁₂V₃W_{1.2}Cu_{1.2}Oₓ) according to the invention
   a) Preparation of the kneaded catalyst mass K3
      Example 1A of WO 2004/108267 (Preparation of a precursor mass for the purpose of producing a multi-element oxide mass of stoichiometry Mo₁₂V₃W_{1.2}Cu_{2.4}Oₓ) was repeated, but instead of 16.3 kg of copper(II) acetate hydrate, 8 kg of copper(II) acetate hydrate was used. A spray powder of the catalytically active multi-element oxide mass of stoichiometry Mo₁₂V₃W_{1.2}Cu_{2.4}Oₓ was obtained. The resulting spray powder had a loss on ignition of 19.1 wt.-% (annealing under air for 3 h at 600°C in a porcelain crucible (which had been annealed at 900°C until constant weight was reached) and a d₅₀ value of 3.6 µm at a dispersion pressure of 1.1 bar absolute (d₁₀ value = 0.6 µm and d₉₀ value = 14.0 µm).
      75 kg of the obtained spray powder was dosed into a kneader of type VM 160 (Z-shaped kneading blades) made by AMK (Aachener Misch- und Knetmaschinen Fabrik, 52074 Aachen, Germany) as in example 1a). During dosing, the kneading blades worked in opposite directions against the outer walls of the tub (barrel) and the working direction of the kneader's discharge screw was towards the inside of the tub (speed of the screw: 20 rpm). Then 11.5 liters of 60 wt.-% acetic acid were added, followed by 7.0 liters of demineralised water. After the demineralised water had been added, the kneading mass was kneaded for 30 minutes. The kneading blades continued to work in opposite directions towards the inside of the tub and the working direction of the squeezing screw pointed towards the inside of the tub. The kneading material in the kneader was cooled down to 30°C during kneading via a water-glycol mixture (25 wt.-% glycol in 75 wt.-% water) and a circulation cooler of the type Unichiller P022w OLÉ spez (Fa. Huber Kältemaschinen GmbH, 77656 Offenburg, Germany). The cooling water cooled the kneading material through a double jacket on the tub and through the interior of the kneading blades. After 30 minutes kneading time the kneading material was discharged into the extruder inlet. For this purpose, the working direction of the discharge screw was reversed and the speed was set to 12 rpm.
      The storage modulus of the kneading material (measurement was carried out as described in example a) "Production of the catalyst kneading mass K1") was 2.46·107 Pa at 10 rad.
   b) Preparation and drying of catalyst extrudates E3 (Mo₁₂V₃W_{1.2}Cu_{1.2}Oₓ)
      The production and drying of the catalyst extrudates E3 was carried out as described in application example 1b) in a screw extruder of the type P160 from ECT Kema (02829 Schopstal, Germany) and in a belt dryer as shown in Fig. 7 an 8 manufactured by Bernd Münstermann GmbH & Co. KG (48291 Telgte, Germany). However, in this case the room air was heated to 180°C, but the temperatures in the individual drying zones were identical to the design example 1 b).
      The residual moisture of the catalyst extrudates E3 was 22 wt.-% and the storage modulus was 2.28·10⁶ Pa at 10 rad.
   c) Preparation of the calcined, milled catalyst powder C3 (Mo₁₂V₃W_{1.2}Cu_{1.2}Oₓ)
      The extrudates were then calcined in a rotary kiln as described in example A) of the patent application EP 3 046 668 B1, and afterwards milled in a shifter mill (315 ZPS, Fa. Hosokawa Alpine, 86001 Augsburg, Germany) at 2500 rpm, resulting in a fine powder with particle size from 2 to 50 µm and an ignition loss of 21 ± 2 wt.-%.
   d) Preparation of hollow cylinder support materials coated with active catalyst mass H3 (Mo₁₂V₃W_{1.2}Cu_{1.2}Oₓ)
      The next preparation step was the coating of this powder on hollow cylinder support material (Steatite type C220, Fa. CeramTec GmbH, 73207 Plochingen, Germany) (outer diameter x inner diameter x height: 7 x 3 x 4 mm) as described in example C in the patent application EP 3 046 668 B1.
4) Preparation of reference hollow cylinder support materials coated with active catalyst mass H4 (Mo₁₂V₃W_{1.2}Cu_{1.2}Oₓ)
   The different preparation steps of the reference hollow cylinder support materials coated with active catalyst mass H4 were the same as the ones described for hollow cylinder support materials coated with active catalyst mass A3, except for the extrusion. In this case, the extrudates E4 were prepared under atmospheric pressure.

### TESTING OF CATALYSTS

### 1) Catalytic testing of active catalyst H1 and the comparative catalyst H2 for the partial oxidation of propylene to acrolein

A reaction tube (V2A steel; external diameter 21 mm, wall thickness 3 mm, internal diameter 15 mm, length 120 cm) was charged from the top downward in flow direction as follows:

| | |
|---|---|
| Section 1: | approximately 30 cm length as a preliminary bed consisting of 40 g of steatite spheres each with a diameter of 1.5 to 2.0 mm |
| Section 2: | approximately 70 cm length as a catalyst charge consisting of a homogeneous mixture of 40 g of the hollow cylindrical calcined shaped bodies produced in example 1) and 60 g of hollow steatite cylinders (dimensions: 5 x 5 x 2; external diameter x internal diameter, in mm). |

In each case, the temperature of the reaction tube was in each case controlled by means of a molecular nitrogen-sparged salt bath with a salt bath temperature of 380°C (53 wt.-% potassium nitrate, 40 wt.-% sodium nitrite and 7 wt.-% sodium nitrate). The salt bath was within a cylindrical shell. The cylindrical shell had the same length as the reaction tube. The reaction tube was inserted into the cylindrical shell from the top downward such that the two axes of symmetry coincided. The nitrogen stream sparged into the salt bath from the bottom was 40 I (STP)/h. The heat losses of the salt bath to the environment were greater than the heat of reaction produced by the reactor during the partial oxidation. A constant temperature of T_{SB} was maintened in the salt by means of electrical heating. In this way, it was ensured that the outer wall of the reaction tube always had the appropriate temperature T_{SB} (°C).
The reactor was charged continuously with a charge gas mixture (mixture of air, polymer grade propylene and nitrogen) of the composition:
5 Vol-%. of propene,
9.5% Vol.-% oxygen and, as the remainder to 100% N₂ Vol.-%.

The mixed gas flow rate was regulated such that the propene conversion C (based on a single pass of the reaction gas mixture through the reaction tube, in mol %) was 95.4 mol % at a salt bath temperature T_{SB} of 380°C.

Table 1 shows the different results for catalyst H1 and H2 after 70 hrs on stream. S_{DP} is the selectivity of desired product and S_{COx} is the selectivity of unwanted COₓ at a proylene conversion of approx. 97.3%.

**Table 1**

| | T_{SB} [°C] | X [%] | S_{DP} [mol%] | S_{COx} [mol%] |
|---|---|---|---|---|
| H1 (according to invention) | 380 | 97.3 | 85.7 | 13.1 |
| H2 (not according to invention) | 380 | 97.4 | 85.4 | 13.4 |

| | | | | |
|---|---|---|---|---|
| * | | | | |

The results show that preparation of the catalyst according to the invention results in the same salt bath temperature T_{SB} at a comparable conversion X.
However, the desired product selectivity S_{DP} is higher for the catalyst prepared using the current invention, whereas the unwanted COₓ-selectivity is reduced.

### 2) Catalytic testing of active catalyst mass H3 and the comparative catalyst mass H4

The catalyst with the active catalytic mass H3 was tested in a reaction tube (V2A stainless steel, external diameter 30 mm, wall thickness 2 mm, internal diameter 26 mm, length 465 cm) surrounded by salt bath (mixture of 53 wt.-% potassium nitrate, 40 wt.-% sodium nitrite and 7 wt.-% sodium nitrate, 50 kg salt melt), and which was charged from the top downwards as follows:

| | |
|---|---|
| Section 1: | length 79 cm, empty tube |
| Section 2: | length 62 cm, preliminary bed of steatite rings of geometry 7 mm x 3 mm x 4 mm (external diameter x length x internal diameter, C220 Steatite from CeramTec) |
| Section 3: | length 100 cm, fixed catalyst bed composed of a homogeneous mixture consisting of 15 wt.-% steatite rings of 7 mm x 3 mm x 4 mm geometry (external diameter x length x internal diameter, C220 Steatite from CeramTec) and 80 wt.-% of the respective catalyst H3 and H4 |
| Section 4: | length 200 cm, fixed catalyst bed exclusively consisting of catalyst H3 and H4 also used in section 3 |
| Section 5: | length 10 cm, subsequent bed of the same steatite rings as in section 2 |
| Section 6: | length 14 cm, catalyst support made from V2A stainless steel for accommodation of the fixed catalyst bed |

The reaction mixture had the following starting composition:
4.3 Vol.-% acrolein
0.2 Vol.-% propene
0.2 Vol.-% propane
0.3 Vol.-% acrylic acid
5.4 Vol.-% O₂
7 Vol.-% H₂O
0.4 Vol.-% CO and CO₂
82.2 Vol.-% N₂

The reaction mixture flowed through the reaction tube from the top downward. The acrolein space velocity (as defined in DE 19927624 A1) on the fixed catalyst bed was set in each case to 75 l (STP)/ l*h in each case. The salt bath temperature T_{SB} was set so that for a single pass the acrolein conversion was 99.3 mol-%. The salt bath temperature T_{SB} corresponds to the temperature at which the molten salt was fed into the salt bath. In all cases the acrolein conversion was 99.3 mol-% for a single pass.

**Table 2**

| | T_{SB} [°C] | S_{AA} ¹⁾ [mol-%] |
|---|---|---|
| H3 (acorrding to invention) | 260 | 97.0 |
| H4 (not according to invention) | 260 | 96.7 |

| | | |
|---|---|---|
| 1) Acrylic acid selectivity | | |

The results show that preparation of the catalyst according to the invention results in the same salt bath temperature T_{SB} and better conversion X.
Moreover, the acrylic acid selectivity S_{AA} is higher for the catalyst prepared using the invention.

## Claims

1. A method for producing a multimetal oxide catalyst, comprising preparation of a precursor composition, exposing said precursor composition to elevated temperatures to activate the composition, and grinding the activated composition, wherein the preparation of the precursor composition comprises:
a) forming a plasticized precursor composition from the constituents of the composition;
b) discharging the plasticized precursor composition from an extruder having at least one die to form extrudates;
c) allowing the extrudates to drop onto a transfer surface disposed beneath the at least one die whereby the extrudates break into pieces which come to rest on the transfer surface;
d) transferring the pieces to at least one drying chamber; and
e) moving the pieces through the at least one drying chamber on an air permeable drying conveyor belt;
wherein steps b) through d) are carried out under reduced pressure.

2. The method of claim 1, wherein the pressure in the drying chamber is reduced by 5 to 50 mbar, relative to atmospheric pressure.

3. The method of any one of the preceding claims, wherein the transfer surface is an air permeable drying conveyor belt.

4. The method of any one of the preceding claims, wherein the transfer surface is a swiveling conveyor belt.

5. The method of any one of the preceding claims, wherein the drop height from the extruder die to the transfer surface is 450 mm or less and in particular in the range from 300 to 400 mm.

6. The method of any one of the preceding claims, wherein the pieces are dried with hot air having a temperature in the range from 150 to 200 °C.

7. The method of claim 6, wherein the hot air is fed vertically onto the air permeable drying conveyor belt and is exhausted together with the humidity.

8. The method of any one of the preceding claims, wherein the drying chamber comprises a plurality of drying zones, in particular 2, 3 or 4 drying zones.

9. The method of claim 8, wherein the temperature in the drying chamber increases from drying zone to drying zone starting with the first zone after the at least one die.

10. The method of claim 8, wherein the increase of the temperature is 10 to 25 °C from drying zone to drying zone.

11. The method of any one of the preceding claims, wherein step a) is carried out by kneading a dry powder of precursor components with water or a water-soluble organic solvent or a mixture thereof.

12. The method of claim 11, wherein the dry powder of the precursor components is obtainable by spray drying an aqueous solution or suspension of the starting materials.

13. The method of claim 12, wherein the plasticized precursor composition has a storage module in the range from 2 · 10⁶ Pa to 5 · 10⁷ Pa at 10 rad.

14. The method of any one of the preceding claims, wherein the extrudates exhibit one or more of the following parameters:
a) a residual moisture content in the range from 12 to 18 % by weight, based on the total weight of the strands;
b) a storage modul, determined at 10 rad and 23 °C, in the range from 2 to 3 · 10⁶ Pa; and
c) a stickiness (adhesion force) in the range from 150 to 180 µN, as measured with an indenter measurement of the sample surface with a nanoindenter type G200 from Keysight Technologies.

15. The method of any one of the preceding claims, wherein the dried pieces are subjected to a thermal treatment at a temperature in the range from 100 to 1100 °C.

16. The method of claim 15, wherein the heat treatment is carried out in a rotary kiln.
